# EUROPEAN PATENT APPLICATION

(11) **EP 4 312 339 A1**
(43) Date of publication of application: **31.01.2024**
(21) Application number: 23168180.0
(22) Date of filing: 17.04.2023
(51) Int. Cl.: H02J 7/00, B60L 53/60, B60L 53/80

(54) **BATTERY ENERGY STATIONS AND CHARGING MANAGEMENT METHODS THEREOF**

(30) Priority: 25.07.2022 TW 111127792
(71) Applicant: Ionex Energy Inc., Taipei City 115 (TW)
(72) Inventor: WANG, JOHN C., 115 Taipei City (TW); HSU, CHI-HUI, 115 Taipei City (TW); HSIEH, HSIN-YEN, 115 Taipei City (TW); HOU, YI-AN, 115 Taipei City (TW)
(74) Representative: Karakatsanis, Georgios

(57) **Abstract**

Battery energy stations and charging management methods thereof are provided, which are suitable for an electronic equipment used for storing and charging a plurality of batteries. First, an electricity of each battery is obtained. Then, an energy distribution operation is performed for the batteries according to the electricity of each battery, wherein the energy distribution operation sequentially allocates a charging current for each battery from the battery with the highest electricity to the battery with the lowest electricity, until a total current is allocated. Then, the respective battery is charged according to the corresponding charging current allocated to each battery, so as to satisfy a charging demand required by at least a part of the batteries.

## Description

### BACKGROUND OF THE INVENTION

### Field of the Invention

The disclosure relates generally to battery energy stations and charging management methods thereof, and, more particularly to battery energy stations and charging management methods thereof capable of managing battery charging schedules under the premise of a specific charging current.

### Description of the Related Art

Recently, with the rising awareness of environmental protection and electric vehicle technology advances, the development of electric vehicles powered by electrical energy to replace traditional vehicles powered by fossil fuels has gradually become an important goal in the automotive field, thus making electric vehicles become more and more popular. In order to increase the range and willingness to use electric vehicles, many countries or cities have begun to set up charging stations and battery energy stations in public places to provide electric vehicles and/or electric vehicles for charging or battery exchange, making the use of electric vehicles more convenient.

With the popularization of electric vehicles, the demand for electricity also increases accordingly. Since the upgrade of existing power plants and power grids requires huge costs and time, if it is necessary to meet the power consumption of various fields, such as industrial power consumption, household power consumption, and public power consumption at the same time, it will cause a serious burden on the existing power grid, and further increase the crisis of power outage and blackout. In response to the crisis of the power grid, power plants and power consumers, such as manufacturers of charging stations/battery energy stations, can cooperate in energy regulation agreements, such as demand response to manage power consumption in the power grid. For example, when the power consumption peaks, the power plant can notify the relevant operators to reduce the demand for electricity, and reward the operators with specific feedback.

Generally, when the power grid is at off-peak time, the power consumption end, such as the charging station/battery energy station, can be carried out the charging operation according to the originally designed charging rules. For example, at off-peak time, the battery energy station can charge its stored batteries at the highest efficiency. However, at peak time, and the station must cooperate with the power plant for energy regulation, the power consumer end must implement specific charging rules to meet the electricity demand under energy regulation. How to maintain the normal operation of the power grid and at the same time meet the electricity demand of users is an urgent problem that the industry needs to solve.

### BRIEF SUMMARY OF THE INVENTION

An embodiment of a battery energy station comprises an energy module having a total current, a battery storage system including a plurality of batteries, and a processing unit. The processing unit couples to the battery storage system to obtain an electricity corresponding to each battery, and execute an energy distribution operation for the batteries according to the electricity of each battery. The energy distribution operation distributes a charging current sequentially from the battery with the highest electricity to the battery with the lowest electricity until the total current is distributed. The processing unit triggers to charge the respective batteries according to the charging current assigned to each battery, so as to satisfy at least one charging demand required by at least a part of the batteries.

In an embodiment of a charging management method, which are suitable for use in an electronic equipment used for storing and charging a plurality of batteries. First, an electricity of each battery is obtained. Then, an energy distribution operation is performed for the batteries according to the electricity of each battery, wherein the energy distribution operation sequentially allocates a charging current for each battery from the battery with the highest electricity to the battery with the lowest electricity, until a total current is allocated. Then, the respective battery is charged according to the corresponding charging current allocated to each battery, so as to satisfy a charging demand required by at least a part of the batteries.

In some embodiments, a specific signal of a first battery among the batteries is received. In response to the specific signal, the electricity of each battery other than the first battery is obtained, and the energy distribution operation is reexecuted according to the electricity of each battery.

In some embodiments, the specific signal is used to inform the first battery that it is fully charged, or the charging demand of the first battery is changed.

In some embodiments, it is determined whether the electricity of each battery is greater than a first predetermined power level. When the electricity of a second battery is greater than the first predetermined power level, the second battery is excluded from the energy distribution operation.

In some embodiments, a battery demand is received. In response to the battery demand, at least one candidate battery with an electricity greater than a second predetermined power level is selected from the batteries, and the candidate battery is provided to be taken out from the electronic equipment.

In some embodiments, a cloud server is connected via a network, the information of the total current and a specific time for executing the energy distribution operation are received from the cloud server, and the energy distribution operation is executed according to the total current at the specific time.

Charging management methods may take the form of a program code embodied in a tangible media. When the program code is loaded into and executed by a machine, the machine becomes an apparatus for practicing the disclosed method.

### BRIEF DESCRIPTION OF THE DRAWINGS

The invention will become more fully understood by referring to the following detailed description with reference to the accompanying drawings, wherein:
Fig. 1 is a schematic diagram illustrating an embodiment of a battery energy station of the invention;
Fig. 2 is a schematic diagram illustrating another embodiment of a battery energy station of the invention;
Fig. 3 is a flowchart of an embodiment of a charging management method for a battery energy station of the invention;
Fig. 4 is a flowchart of another embodiment of a charging management method for a battery energy station of the invention;
Fig. 5 is a flowchart of another embodiment of a charging management method for a battery energy station of the invention;
Fig. 6 is a flowchart of another embodiment of a charging management method for a battery energy station of the invention; and
Fig. 7 is a flowchart of another embodiment of a charging management method for a battery energy station of the invention.

### DETAILED DESCRIPTION OF THE INVENTION

The following description is of the best-contemplated mode of carrying out the invention. This description is made for the purpose of illustrating the general principles of the invention and should not be taken in a limiting sense. It should be understood that the embodiments may be realized in software, hardware, firmware, or any combination thereof.

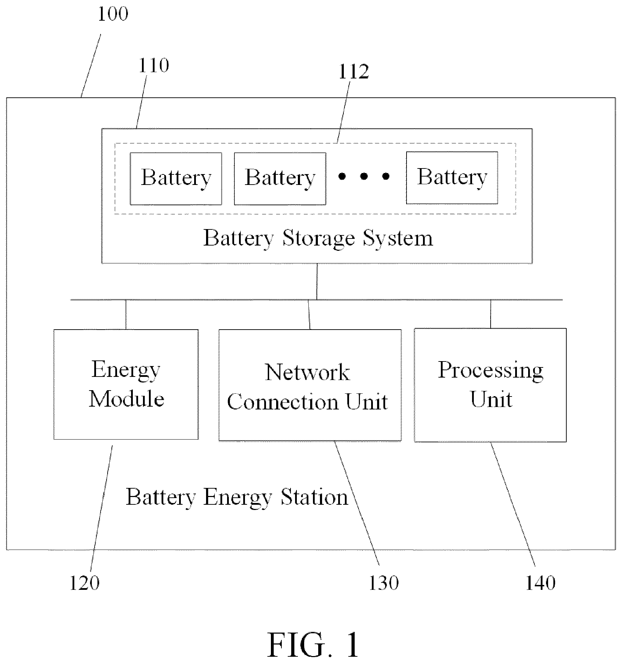

Fig. 1 is a schematic diagram illustrating an embodiment of a battery energy station of the invention. The battery energy station 100 of the present invention can be applied to an electronic equipment. As shown in the Fig. 1, the battery energy station 100 at least comprises a battery storage system 110, an energy module 120, a network connection unit 130, and a processing unit 140. The battery storage system 110 has a specific mechanism (not shown in the figure) that can store a plurality of batteries 112 and selectively lock or release the batteries. The battery energy station 100 can provide at least one battery for at least one electric device, such as an electric motorcycle or an electric vehicle to use. The energy module 120 can be electrically coupled to a power grid (not shown in the figure), so as to obtain a total current to supply power for the battery energy station, and to charge the batteries 112 in response to the signal of the processing unit 140. It must be noted that the battery storage system 110 may comprise a charging module corresponding to each battery, and the charging module has an upper current limit and/or a lower current limit to charge the corresponding battery. It should be noted that, in some embodiments, the energy module 120 can actively detect the total current supplied by the grid to the battery energy station 100, and notify the processing unit 140 of the information of the total current. The network connection unit 130 can be connected to a network, so that the battery energy station 100 has a network connection capability. In some embodiments, the network may be a wired network, a telecommunication network, and a wireless network such as a Wi-Fi network. The processing unit 140 can control the operation of all hardware and software in the battery energy station 100, and execute the charging management method of the battery energy station of the invention, the details will be described later.

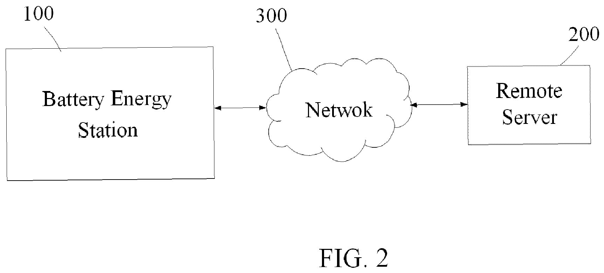

Fig. 2 is a schematic diagram illustrating another embodiment of a battery energy station of the invention. Similarly, the battery energy station 100 of the invention can be applied to an electronic equipment, which has a plurality of batteries that can be provided to at least one electric device, such as an electric motorcycle or an electric vehicle. The battery energy station 100 may have components similar to those shown in FIG. 1, which will be omitted here. The battery energy station 100 can use the network connection unit 130 to connect to a remote server 200 through a network 300 such as a wired network, a telecommunication network, and a wireless network such as a Wi-Fi network. It is reminded that, in some embodiments, the remote server 200 can simultaneously manage other battery power stations located at the same location or at different locations. As mentioned above, the energy module 120 of the battery energy station 100 can actively detect the total current supplied by the grid to the battery energy station 100, and notify the processing unit 140 of the information of the total current. In some embodiments, the remote server 200 can also notify the battery energy station 100 of the information of the total current through the network 300. The battery energy station 100 can perform charge management operations according to the received information.

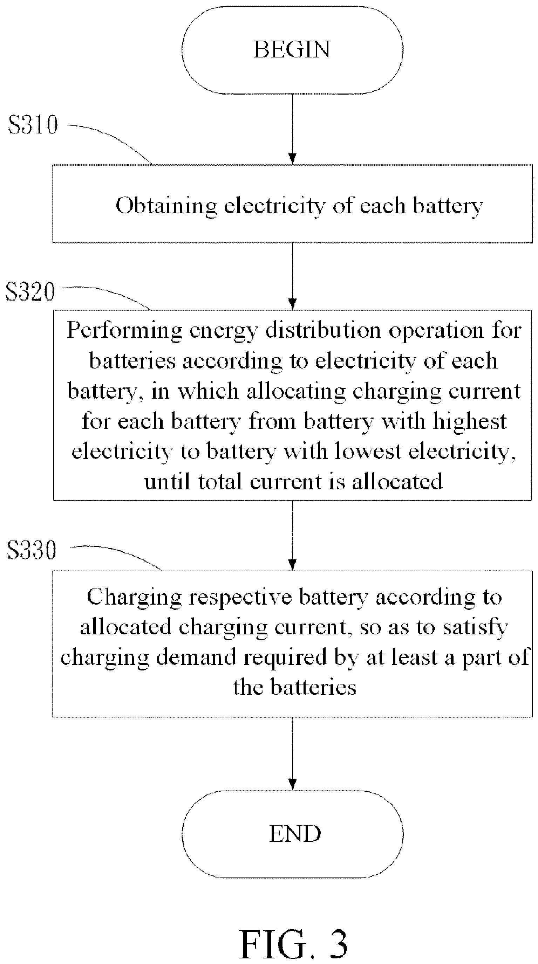

Fig. 3 is a flowchart of an embodiment of a charging management method for a battery energy station of the invention. The charging management method of the battery energy station according to the embodiment of the present invention is applicable to an electronic equipment for storing and charging multiple batteries, such as the battery energy station in FIG. 1.

First, in step S310, the electricity corresponding to each battery is obtained. It is reminded that, in some embodiments, the charging module of the battery energy station can send a signal to the battery electrically coupled to it to detect the power level, so as to obtain the electricity of the battery. Then, in step S320, an energy distribution operation is performed on the batteries according to the electricity of each battery. It is worth noting that in some embodiments, the energy distribution operation may be performed during a peak-time of power consumption. In some embodiments, the energy distribution operation is aimed at achieving the fastest output of fully charged batteries, for example, the electricity of the battery reaches a predetermined power level. In some embodiments, the energy distribution operation is to sequentially distribute a charging current from the battery with the highest electricity to the battery with the lowest electricity until a total current is distributed. It should be noted that, in some embodiments, the energy module of the battery energy station can actively detect the total current supplied by the grid to the battery energy station. In some embodiments, the battery energy station can receive the information of the total current from the remote server through the network. In addition, in some embodiments, the cloud server may also transmit a specific time for executing the energy distribution operation, and the battery energy station will execute the energy distribution operation when the specific time is up. It is reminded that the sequentially allocated charging current may be the highest current required or acceptable by the battery/charging module. When the remaining current is less than the maximum current required or acceptable by the subsequent battery/charging module, the remaining current will be allocated to the subsequent battery for charging. For example, when the total current is 40A, and the highest current required or acceptable by each battery/charging module is 17A, the charging current 17A can be assigned to battery A with the highest electricity; the charging current 17A can be assigned to battery B with the second highest electricity; and the remaining charging current 6A ca be assigned to battery C with the third highest electricity. If there is battery D with the fourth highest electricity in the battery energy station, the battery D is not allocated any charging current during this energy distribution operation. Then, in step S330, the respective batteries are charged according to the charging current allocated to the respective batteries, so as to meet a charging demand required by at least a part of the batteries. As in the previous example, when battery A, battery B, battery C and battery D in the battery energy station have charging needs at the same time, the charging demands of battery A, battery B and battery C can be met through this energy distribution operation.

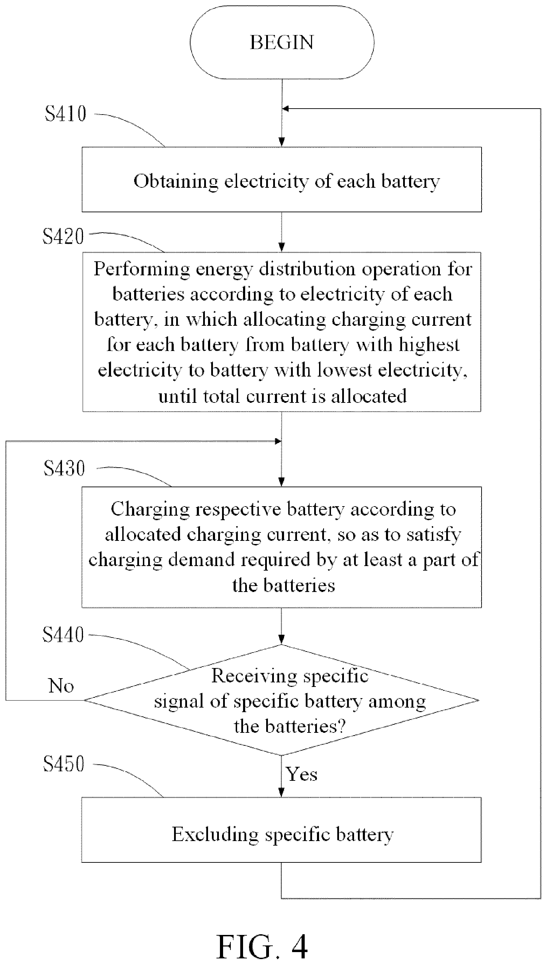

Fig. 4 is a flowchart of another embodiment of a charging management method for a battery energy station of the invention. The charging management method of the battery energy station according to the embodiment of the present invention is applicable to an electronic equipment for storing and charging multiple batteries, such as the battery energy station in FIG. 1.

First, in step S410, the electricity corresponding to each battery is obtained. Similarly, in some embodiments, the charging module of the battery energy station can send a signal to the battery electrically coupled to it to detect the power level, so as to obtain the electricity of the battery. Then, in step S420, an energy distribution operation is performed on the batteries according to the electricity of each battery. Similarly, in some embodiments, the energy distribution operation may be performed during a peak-time of power consumption. In some embodiments, the energy distribution operation is aimed at achieving the fastest output of fully charged batteries, for example, the electricity of the battery reaches a predetermined power level. In some embodiments, the energy distribution operation is to sequentially distribute a charging current from the battery with the highest electricity to the battery with the lowest electricity until a total current is distributed. Similarly, in some embodiments, the energy module of the battery energy station can actively detect the total current supplied by the grid to the battery energy station. In some embodiments, the battery energy station can receive the information of the total current from the remote server through the network. In addition, in some embodiments, the cloud server may also transmit a specific time for executing the energy distribution operation, and the battery energy station will execute the energy distribution operation when the specific time is up. It is reminded that the sequentially allocated charging current may be the highest current required or acceptable by the battery/charging module. When the remaining current is less than the maximum current required or acceptable by the subsequent battery/charging module, the remaining current will be allocated to the subsequent battery for charging. Then, in step S430, the respective batteries are charged according to the charging current allocated to the respective batteries, so as to meet a charging demand required by at least a part of the batteries. In step S440, it is determined whether a specific signal of a specific battery among the batteries is received. It is worth noting that in some embodiments, the specific signal can be used to notify that the specific battery is fully charged. In some embodiments, the specific signal can be used to notify the change of charging demand corresponding to the specific battery. When the specific signal is not received (No in step S440), the flow goes to step S430. When the specific signal corresponding to the specific battery is received (Yes in step S440), in step S450, in response to the specific signal, the specific battery is excluded, and in step S410, re-obtain the electricity of each battery other than the specific battery, and in step S420, re-execute the energy distribution operation according to the electricity of each battery. The charging operation procedure can continue until all the batteries in the battery energy station have completed the charging operation.

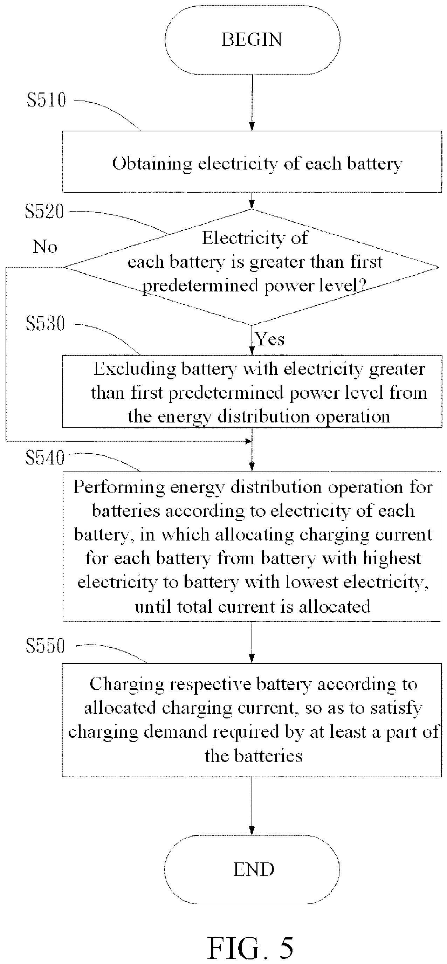

Fig. 5 is a flowchart of another embodiment of a charging management method for a battery energy station of the invention. The charging management method of the battery energy station according to the embodiment of the present invention is applicable to an electronic equipment for storing and charging multiple batteries, such as the battery energy station in FIG. 1.

First, in step S510, the electricity corresponding to each battery is obtained. Similarly, in some embodiments, the charging module of the battery energy station can send a signal to the battery electrically coupled to it to detect the power level, so as to obtain the electricity of the battery. Then, in step S520, it is determined whether the electricity of each battery is greater than a first predetermined power level. It should be noted that the first predetermined power level can be set according to different applications and requirements. In some embodiments, the first predetermined power level can be set as 90% or 95%. It should be noted that the aforementioned power level is only an example of this case, and the present invention is not limited thereto. When the electricity of a second battery among the batteries is greater than the first predetermined power level (Yes in step S520), in step S530, the second battery is excluded from the energy distribution operation. When the electricity of the battery is not greater than the first predetermined power level (No in step S520), in step S540, an energy allocation operation is executed for the batteries according to the electricity of each battery. Similarly, in some embodiments, the energy distribution operation may be performed during peak-time of power consumption. In some embodiments, the energy distribution operation is aimed at achieving the fastest output of fully charged batteries, for example, the electricity of battery reaches a predetermined power level. In some embodiments, the energy distribution operation is to sequentially distribute a charging current from the battery with the highest electricity to the battery with the lowest electricity until a total current is distributed. Similarly, in some embodiments, the energy module of the battery energy station can actively detect the total current supplied by the grid to the battery energy station. In some embodiments, the battery energy station can receive the information of the total current from the remote server through the network. In addition, in some embodiments, the cloud server may also transmit a specific time for executing the energy distribution operation, and the battery energy station will execute the energy distribution operation when the specific time is up. It is reminded that the sequentially allocated charging current may be the highest current required or acceptable by the battery/charging module. When the remaining current is less than the maximum current required or acceptable by the subsequent battery/charging module, the remaining current will be allocated to the subsequent battery for charging. Then, as in step S550, the respective batteries are charged according to the charging current allocated to the respective batteries, so as to satisfy at least one charging demand required by at least a part of the batteries.

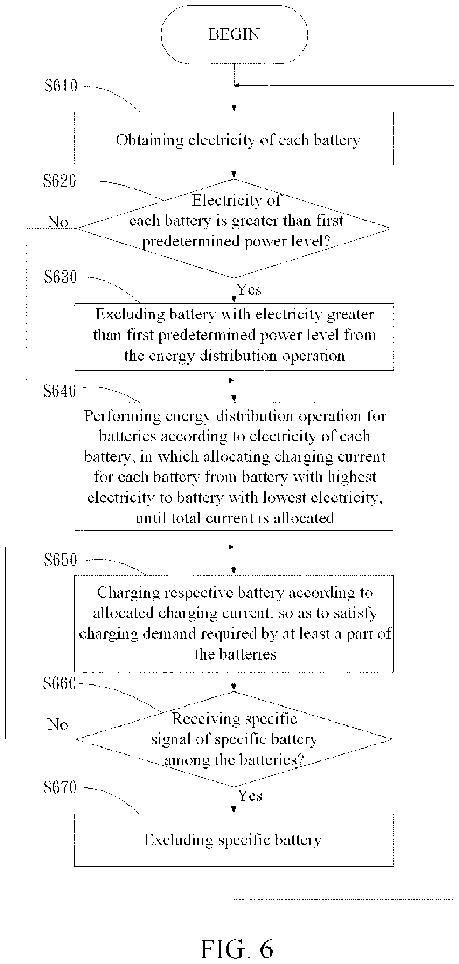

Fig. 6 is a flowchart of another embodiment of a charging management method for a battery energy station of the invention. The charging management method of the battery energy station according to the embodiment of the present invention is applicable to an electronic equipment for storing and charging multiple batteries, such as the battery energy station in FIG. 1.

First, in step S610, the electricity corresponding to each battery is obtained. Similarly, in some embodiments, the charging module of the battery energy station can send a signal to the battery electrically coupled to it to detect the power level, so as to obtain the electricity of the battery. Then, in step S620, it is determined whether the electricity of each battery is greater than a first predetermined power level. Similarly, the first predetermined power level can be set according to different applications and requirements. When the electricity of a second battery among the batteries is greater than the first predetermined power level (Yes in step S620), in step S630, the second battery is excluded from the energy distribution operation. When the electricity of the battery is not greater than the first predetermined power level (No in step S620), in step S640, an energy allocation operation is executed for the batteries according to the electricity of each battery. Similarly, in some embodiments, the energy distribution operation may be performed during peak-time of power consumption. In some embodiments, the energy distribution operation is aimed at achieving the fastest output of fully charged batteries, for example, the electricity of battery reaches a predetermined power level. In some embodiments, the energy distribution operation is to sequentially distribute a charging current from the battery with the highest electricity to the battery with the lowest electricity until a total current is distributed. Similarly, in some embodiments, the energy module of the battery energy station can actively detect the total current supplied by the grid to the battery energy station. In some embodiments, the battery energy station can receive the information of the total current from the remote server through the network. In addition, in some embodiments, the cloud server may also transmit a specific time for executing the energy distribution operation, and the battery energy station will execute the energy distribution operation when the specific time is up. It is reminded that the sequentially allocated charging current may be the highest current required or acceptable by the battery/charging module. When the remaining current is less than the maximum current required or acceptable by the subsequent battery/charging module, the remaining current will be allocated to the subsequent battery for charging. Then, as in step S650, the respective batteries are charged according to the charging current allocated to the respective batteries, so as to satisfy at least one charging demand required by at least a part of the batteries. Then, in step S660, it is determined whether a specific signal of a specific battery among the batteries is received. Similarly, in some embodiments, the specific signal may be used to notify that the specific battery is fully charged. In some embodiments, the specific signal can be used to notify the charging demand of the specific battery is changed. When the specific signal is not received (No in step S660), the procedure remains at step S650. When the specific signal corresponding to the specific battery is received (Yes in step S660), in step S670, in response to the specific signal, the specific battery is excluded, and in step S610, the electricity of each battery other than the specific battery are re-obtained, and the energy distribution and charging operations are repeated until all batteries in the battery energy station have completed the charging operations.

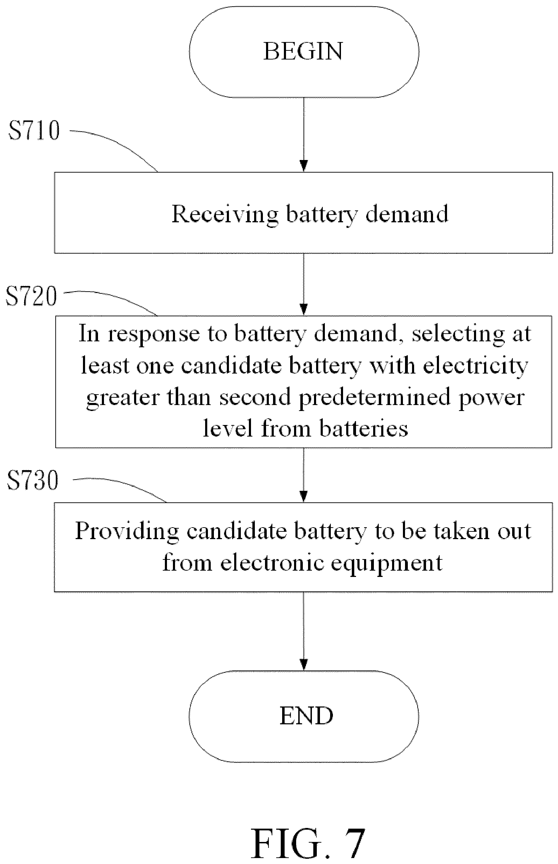

Fig. 7 is a flowchart of another embodiment of a charging management method for a battery energy station of the invention. The charging management method of the battery energy station according to the embodiment of the present invention is applicable to an electronic equipment for storing and charging multiple batteries, such as the battery energy station in FIG. 1. In this embodiment, the battery energy station can provide battery removal service in response to user request.

First, in step S710, a battery demand is received. It is worth noting that in some embodiments, the user can place at least one old battery into the battery energy station to trigger this battery demand. In some embodiments, the user can generate the battery demand through a user interface of the battery energy station. Next, in step S720, in response to the battery demand, at least one candidate battery is selected from the batteries with a corresponding electricity greater than a second predetermined power level. It should be noted that the second predetermined power level can be set according to different applications and requirements. In some embodiments, the second predetermined power level can be set to 20% or 25%. It should be noted that the aforementioned power level is only an example of this case, and the present invention is not limited thereto. Then, in step S730, the candidate battery is provided to be taken out from the battery energy station.

Therefore, the battery energy stations and the charging management methods thereof can manage the battery charging schedule under the premise of a specific charging current, so as to avoid further increasing the load of the power grid under peak-time power consumption, and at the same time satisfy the battery charging of the battery energy station and the user's battery demand.

Charging management methods, may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for executing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for executing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalent.

## Claims

1. A charging management method of battery energy station, which are suitable for use in an electronic equipment used for storing and charging a plurality of batteries, comprising:
obtaining an electricity of each battery;
performing an energy distribution operation for the batteries according to the electricity of each battery, wherein the energy distribution operation sequentially allocates a charging current for each battery from the battery with the highest electricity to the battery with the lowest electricity, until a total current is allocated; and
charging the respective battery according to the charging current allocated to each battery, so as to satisfy a charging demand required by at least a part of the batteries.

2. The method of claim 1, further comprising:
receiving a specific signal of a first battery among the batteries; and
in response to the specific signal, the electricity of each battery other than the first battery is obtained, and the energy distribution operation is reexecuted according to the electricity of each battery.

3. The method of claim 2, wherein the specific signal is used to inform the first battery that it is fully charged, or the charging demand of the first battery is changed.

4. The method of any one of claims 1-3, further comprising:
determining whether the electricity of each battery is greater than a first predetermined power level; and
when the electricity of a second battery is greater than the first predetermined power level, excluding the second battery from the energy distribution operation.

5. The method of any one of claims 1-4, further comprising:
receiving a battery demand;
in response to the battery demand, selecting at least one candidate battery with an electricity greater than a second predetermined power level from the batteries; and
providing the candidate battery to be taken out from the electronic equipment.

6. The method of any one of claims 1-5, further comprising:
connecting with a cloud server via a network;
receiving the information of the total current and a specific time for executing the energy distribution operation from the cloud server; and executing the energy distribution operation according to the total current at the specific time.

7. A battery energy station, comprising:
an energy module having a total current;
a battery storage system comprising a plurality of batteries; and
a processing unit coupling to the battery storage system to obtain an electricity corresponding to each battery, executing an energy distribution operation for the batteries according to the electricity of each battery, wherein the energy distribution operation distributes a charging current sequentially from the battery with the highest electricity to the battery with the lowest electricity until the total current is distributed, and triggering to charge the respective batteries according to the charging current assigned to each battery, so as to satisfy at least one charging demand required by at least a part of the batteries.

8. The battery energy station of claim 7, wherein the processing unit further receives a specific signal of a first battery among the batteries, in response to the specific signal, obtains the electricity of each battery other than the first battery, and re-executes the energy distribution operation according to the electricity of each battery.

9. The battery energy station of any one of claims 7-8, wherein the processing unit further determines whether the electricity of each battery is greater than a first predetermined power level, and when the electricity of a second battery is greater than the first predetermined power level, excludes the second battery from the energy distribution operation.

10. The battery energy station of any one of claims 7-9, wherein the processing unit further connects to a cloud server via a network, receives the information of the total current and a specific time for executing the energy distribution operation from the cloud server, and executes the energy distribution operation according to the total current at the specific time.
